# FASCICULE DE BREVET EUROPEEN

(11) **EP 2 617 215 B1**
(45) Date de publication et mention de la délivrance du brevet: **23.03.2016**
(21) Numéro de dépôt: 11773493.9
(22) Date de dépôt: 09.09.2011
(51) Int. Cl.: H04W 8/26, H04W 24/08, G06F 11/22

(54) **TEST POUR DES CARTES ELECTRONIQUES**
ELEKTRONISCHEKARTEN-TEST
ELECTRONIC CARD TEST

(30) Priorité: 13.09.2010 FR 1057248
(43) Date de publication de la demande: 24.07.2013
(73) Titulaire: Kuantic, 06560 Valbonne-Sophia Antipolis (FR)
(72) Inventeur: FALCHERO, Jean, André, Jacques, F-06370 Mouans-Sartoux (FR); FOUCHE, Bernard, Paul, F-06260 Mougins (FR)
(74) Mandataire: de Zeeuw, Johan Diederick
(86) Numéro de dépôt international: PCT/FR2011/052074
(87) Numéro de publication internationale: WO 2012/035241

(56) Documents cités:
- WO-A1-01/76309
- WO-A2-98/56201
- GB-A- 2 378 098

## Description

### Domaine de l'invention

La présente invention concerne le domaine des cartes électroniques et plus précisément, un procédé de test pour des cartes électroniques intégrées comportant des modules GSM (Global System for Mobile Communication) et des composants d'identification tels que des cartes SIM.

### Etat de l'art

De nos jours, le nombre de dispositifs électroniques connectés aux réseaux GSM est en augmentation constante. Ces dispositifs électroniques comprennent chacun une carte électronique. La carte électronique est pourvue par exemple de micro-processeurs, de diodes, de condensateurs, de résistances, etc. La connexion des dispositifs électroniques aux réseaux GSM est rendue possible par la présence de composants d'identifications tels qu'une carte SIM (Subscriber Identity Module) également intégrée sur la carte électronique, ou par la présence d'un circuit intégré soudé (dit "SIM chip") sur la carte électronique fournissant des fonctionnalités identiques à celles d'une carte SIM. Ainsi, ces dispositifs électroniques peuvent transmettre des informations en utilisant un réseau GSM associé aux composants d'identification d'une carte électronique prédéterminée. Ces dispositifs électroniques peuvent être par exemple des boîtiers électroniques installés dans des véhicules d'utilisateurs finaux comme décrit dans la demande de brevet FR0401779. Ces boîtiers électroniques peuvent être programmés lors de leur fabrication pour communiquer avec des sociétés prestataires de service, telles que des sociétés d'assurance. Ces boîtiers électroniques peuvent également être programmés après leur installation au sein des véhicules d'utilisateurs finaux par exemple. Ainsi, en fonction du besoin de la société prestataire de service, le boîtier électronique peut transmettre à la société prestataire de service concernée, via le réseau GSM, des informations liées au véhicule, telles que le nombre de kilomètres parcourus, la consommation d'essence, l'état de fonctionnement du véhicule, etc.

Afin de garantir la fiabilité de tels boîtiers électroniques, des tests doivent être effectués au stade de la fabrication des boîtiers électroniques afin de tester certaines caractéristiques techniques relatives aux composants mis en oeuvre pour utiliser le réseau GSM, tel que le module GSM et le composant d'identification présents sur la carte électronique. Ces tests doivent permettre, notamment de vérifier d'une part, qu'un composant d'identification est électriquement fonctionnel et d'autre part, que le composant d'identification est capable d'être employé par le module GSM l'utilisant pour accéder à un réseau GSM afin d'établir une communication avec un serveur distant, tel que le serveur de la société prestataire de service. **Un example se trouve dans** WO 01/76309**.**

De nos jours, lorsqu'un fabricant de cartes électroniques souhaite tester des cartes électroniques comportant des composants d'identification nécessaires à l'utilisation d'un réseau GSM, ces composants d'identification doivent être activés par l'opérateur de téléphonie mobile fournisseur des composants d'identification. Ainsi, le fabricant de cartes électroniques doit demander à l'opérateur de téléphonie mobile l'activation de l'ensemble des composants d'identification relatifs à l'ensemble des cartes électroniques à tester. Ainsi, le fabricant de cartes électroniques peut effectuer les tests de connexion des composants d'identification activés sur le réseau GSM de cet opérateur. Cette activation des composants d'identification a donc lieu avant la mise à disposition des boîtiers électroniques auprès d'éventuels utilisateurs finaux.

L'activation des composants d'identification impose au fabricant de cartes électroniques des coûts conséquents pour l'ensemble des cartes électroniques fabriquées. En effet, le fabricant de cartes électroniques doit verser des frais de mise en service pour chaque composant d'identification activé ainsi que des frais associés de maintien de la ligne auprès de l'opérateur de téléphonie. Or, le fabricant de cartes électroniques a besoin d'activer les composants d'identification seulement ponctuellement, pour effectuer le test de connexion du composant d'identification au réseau GSM. De plus, dans la mesure où les boîtiers électroniques sont mis à disposition auprès des utilisateurs finaux selon un délai très variable et non prévisible, les frais engendrés par le maintien de l'activation du composant d'identification auprès de l'opérateur de téléphonie peuvent être conséquents. L'opérateur de téléphonie peut éventuellement effectuer un geste commercial envers le fabricant de cartes électroniques afin de diminuer ou d'annuler les frais de mise en service et d'activation des composants d'identification. Cependant, l'activation des composants d'identification engendre également des frais d'abonnement associé aux composants d'identification activés. De la même manière, l'opérateur de téléphonie peut éventuellement effectuer un geste commercial envers le fabricant de cartes électroniques afin de diminuer le coût de ces abonnements. De manière générale, les frais engendrés par l'activation des composants d'identification sont inévitables.

### Résumé de l'invention

Le but de la présente invention est de proposer un procédé de test pour carte électronique comportant un composant d'identification afin d'éviter des coûts liés à une activation du composant d'identification lors du test de la carte électronique.

A cette fin, l'objet de la présente invention concerne un procédé de test pour une carte électronique (160) comprenant: un composant d'identification non activé (190) destiné à stocker des informations comprenant au moins un numéro définitif d'identification ; un module GSM (180) destiné à communiquer sur le réseau GSM associé au composant d'identification non activé (190) et à extraire des informations stockées au sein du composant d'identification non activé (190) ; un micro-contrôleur(170) destiné à communiquer avec le module GSM (180) ; comprenant le procédé de test comprend les étapes suivantes : émission par le réseau GSM d'une demande au module GSM (180) d'un éventuel numéro temporaire d'identification du composant d'identification non activé (190) ; recherche par le module GSM (180) de l'éventuel numéro temporaire d'identification au sein du composant d'identification non activé (190) ; détermination de l'absence d'éventuel numéro temporaire d'identification ; transmission par le module GSM (180) du numéro définitif d'identification du composant d'identification non activé (190) vers le réseau GSM ; transmission d'un message du module GSM (180) vers le micro-contrôleur (170) afin d'indiquer la transmission du numéro définitif d'identification du composant d'identification non activé (190) vers le réseau GSM ; détermination par le micro-contrôleur de la validité de l'état de fonctionnement du composant d'identification non activé (190) et de l'état de fonctionnement du module GSM (180).

L'avantage d'une telle méthode réside dans le fait que le fabricant de cartes électroniques peut réaliser les tests de connexion des composants d'identification au réseau GSM sans activation préalable des composants d'identification.

### Brève description des dessins

Les buts, objets et caractéristiques de l'invention apparaîtront plus clairement à la lecture de la description qui suit faite en référence aux dessins dans lesquels :
- la figure 1 représente un schéma d'un banc de test selon un mode de réalisation de l'invention ;
- la figure 2 représente un diagramme de certaines étapes du procédé de test, selon un mode de réalisation de l'invention ;

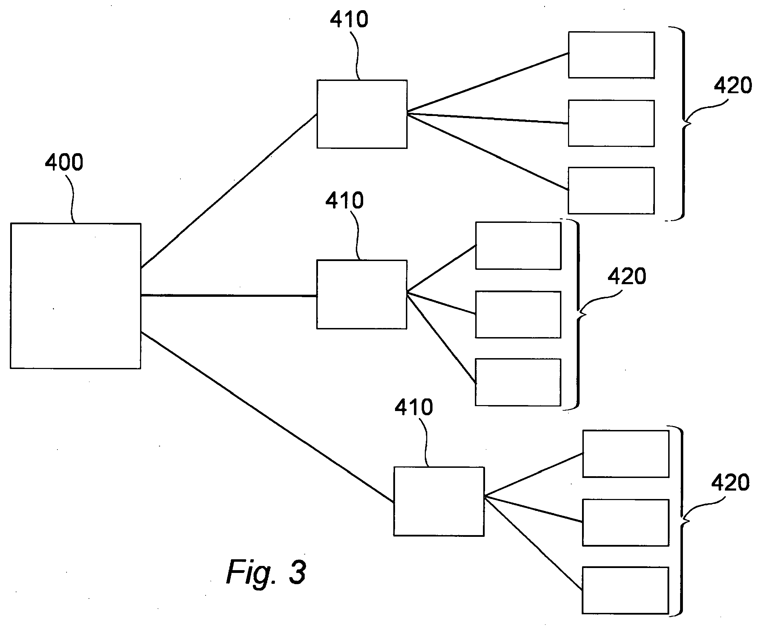

- la figure 3 représente un diagramme de l'architecture en réseau des différents acteurs associés au procédé global de fabrication et de distribution des cartes électroniques comportant la carte SIM testée avec le procédé de test, selon un mode de réalisation de l'invention ;
- la figure 4 représente un schéma des différentes étapes fonctionnelles entre les différents acteurs associés au procédé global de fabrication et de distribution des cartes électroniques comportant la carte SIM testée avec le procédé de test, selon un mode de réalisation de l'invention.

### Description détaillée d'un mode de réalisation

De manière connue, il existe des boîtiers électroniques de toutes sortes comprenant des cartes électroniques afin de réaliser des fonctions spécifiques programmées à l'avance. Ces boîtiers électroniques peuvent être intégrés dans des systèmes complexes tels que des systèmes électroniques embarqués dans des véhicules. La présente invention concerne un procédé de test pour des cartes électroniques comportant une carte SIM et destinées à être notamment intégrées dans des boîtiers électroniques tel que les boîtiers électroniques connus.

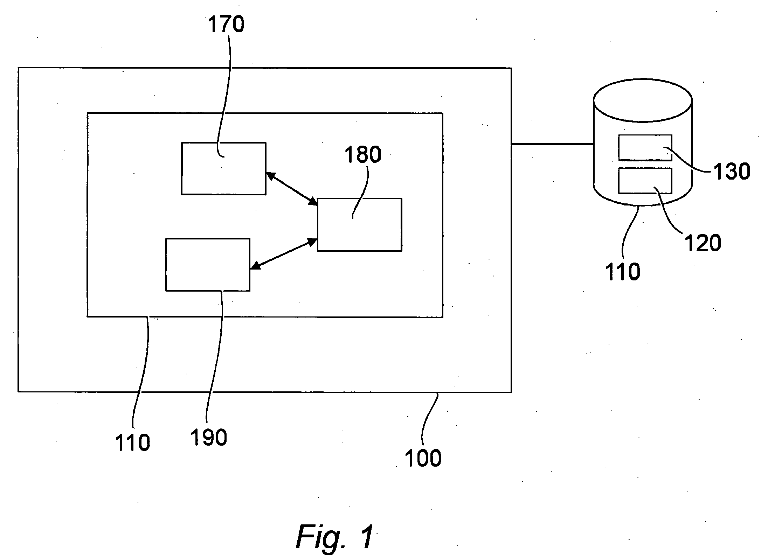

Concernant le procédé de test d'une carte électronique, la figure 1 présente un banc de test 1-00 permettant de réaliser le test des cartes électroniques. Le banc de test 100 est connecté à un serveur 110 du fabricant de cartes électroniques. Le serveur 110 héberge des bases de données 120. Ces bases de données 120 stockent les différentes caractéristiques des cartes électroniques testées par le fabricant de cartes électroniques. Le serveur 110 héberge également des plates-formes 130 d'échange de données. Ces plates-formes 130 permettent d'échanger des données stockées dans les bases de données 120 avec d'autres bases de données (non illustrées) respectivement hébergées par des serveurs distants (non illustrés) appartenant à des prestataires de service ou à des opérateurs de téléphonie par exemple. Lors des transmissions de données entre les serveurs, les serveurs utilisent différentes sortes de protocoles de télécommunication. La nature de ces protocoles dépend des types de serveurs concernés par la transmission de données. Il peut s'agir par exemple d'un protocole de type SOAP (Simple Object Access Protocol) ou d'un échange automatisé de courriels.

De manière connue, le banc de test 140 comporte différentes éléments techniques, tel qu'un lit à clous (non représenté) permettant de mettre sous tension et de tester les différents composants électroniques d'une carte électronique. Une carte électronique 160 est posée sur le lit à clous (non représenté) afin d'être testée. La carte électronique 160 comprend un micro-processeur ou un micro-contrôleur 170, des composants personnalisés selon l'application, un module GSM (Global System for Mobile Communication) 180 et un composant d'identification non activé 190 tel qu'une carte SIM (Subscriber Identity Module) non activée ou un circuit soudé non activé fournissant des fonctionnalités identiques à celles d'une carte SIM.

Le micro-contrôleur 170 contrôle le module GSM 180. Ainsi, le micro-contrôleur 170 peut imposer au module GSM 180 d'extraire des informations spécifiques stockées au sein du composant d'identification non activé 190.

Le micro-contrôleur 170 selon la présente invention comprend un programme destiné à surveiller la réception d'un message en provenance du module GSM 180 au moyen d'un compteur de temps d'une durée prédéterminée.

Le module GSM 180 gère le fonctionnement électronique du composant d'identification non activé 190 et le module GSM 180 est également en charge de mettre en oeuvre des fonctionnalités de transmission radio selon les normes édictées par l'ETSI relatives aux réseaux téléphoniques radios GSM, et plus particulièrement la norme ETSI TS 143.020. Ainsi, selon cette norme ETSI TS 143.020, le module GSM 180 est capable d'activer une communication avec un réseau GSM. Le module GSM 180 gère également le fonctionnement logiciel avec le composant d'identification non activé 190. Ainsi, le module GSM 180 peut obtenir des informations concernant les données enregistrées sur le composant d'identification non activé 190, telles que le numéro IMSI ou le numéro ICCID.

Le composant d'identification non activé 190 est fourni par un opérateur de téléphonie ou par un de ses sous-traitants. Lors de la fabrication du composant d'identification non activé 190, l'opérateur de téléphonie a déterminé un numéro IMSI (International Mobile Subscriber Identity) propre au composant d'identification non activé 190 et stocké sur ce composant d'identification non activé 190. Le numéro IMSI est un numéro de série unique, un numéro définitif d'identification, selon le plan de numérotation standard E.212 de l'Union Internationale des Télécommunications (UIT). Ce numéro IMSI permet d'identifier de manière unique le composant d'identification non activé 190, au sein du réseau GSM de l'opérateur de téléphonie. De manière connue, lorsqu'un composant d'identification est activé pour la première fois sur un réseau GSM, le réseau GSM attribue au composant d'identification un numéro d'identification temporaire TMSI (Temporary Mobile Subscriber Identity). Si le composant d'identification n'a jamais été activé, le composant d'identification ne contient pas d'information relative au numéro d'identification temporaire. De plus, lors de la fabrication du composant d'identification non activé 190, le fabriquant du composant d'identification non activé 190 enregistre également au sein du composant d'identification non activé 190 un numéro ICCID (Integrated Circuit Card Identification). Ce numéro ICCID permet d'identifier de manière unique le composant d'identification non activé 190, au sein de l'ensemble des réseaux GSM des différents opérateurs de téléphonie. Le composant d'identification non activé 190 comprend également un code PIN. Le code PIN peut être modifié à volonté par le propriétaire du composant d'identification non activé 190.

Dans la mesure où le composant d'identification non activé 190 n'est pas activé, le composant d'identification non activé 190 n'est accepté sur aucun réseau GSM, quel que soit l'opérateur de téléphonie du réseau GSM. Cependant, le composant d'identification non activé 190 peut permettre d'effectuer des appels téléphoniques associés à des numéros d'appels d'urgence tels que le numéro d'appel d'urgence européen, le 112.le composant d'identification non activé 190 n'est associé à aucun numéro d'appel.

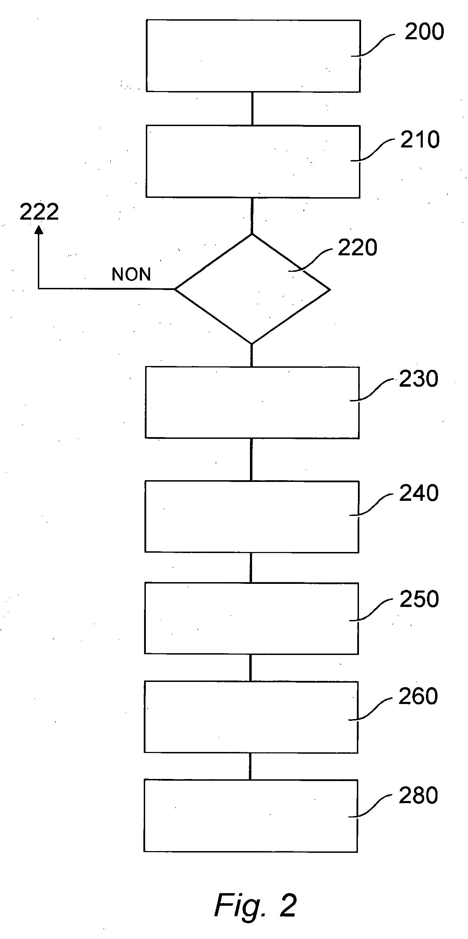

Lors de la procédure de test du composant d'identification non activé 190, un premier et un deuxième test se déroulent selon les étapes indiquées sur la figure 2. Le premier test, un test de connectivité matérielle, permet de vérifier que le composant d'identification non activé 190 est matériellement correctement connecté sur la carte électronique 160. Ainsi, dans une étape 200, le micro-contrôleur 170 active le module GSM 180. Dans une étape 210, le micro-contrôleur 170 commande le module GSM 180 afin que le module GSM 180 extrait des informations spécifiques stockées au sein du composant d'identification non activé 190. Ces informations concernent notamment le numéro ICCID tel que stocké sur le composant d'identification non activé 190. Si, dans une étape 220, le composant d'identification non activé 190 envoie au module GSM 180 le numéro ICCID, alors, dans une étape 230, le module GSM 180 informe le micro-contrôleur 170 que le composant d'identification non activé 190 est correctement connecté sur la carte électronique 160. Ainsi, dans une étape 230, le module GSM 180 valide la connexion électrique du composant d'identification non activé 190. Si, dans une étape 222 le composant d'identification non activé 190 n'envoie pas au module GSM 180 le numéro ICCID, alors le module GSM 180 informe le micro-processeur 170 que le composant d'identification non activé 190 n'est pas correctement connecté sur la carte électronique 160. Dans un tel cas la carte électronique 160 est considérée comme étant défectueuse et fait l'objet d'un traitement adapté. Le déroulement du premier test est alors terminé.

Après l'étape de validation 230, le micro-contrôleur 170 demande au module GSM 180 d'inscrire un code PIN dans le composant d'identification non activé 190 dans une étape 240 optionnelle. Ce nouveau code PIN est attribué par le fabricant de carte électronique et remplace le code PIN attribué par l'opérateur. L'attribution de nouveau code PIN a pour but d'éviter toute tentative d'utilisation frauduleuse du composant d'identification non activé 190 par un tiers qui aurait connaissance du code PIN attribué par l'opérateur de téléphonie.

Ensuite, dans une étape 250 optionnelle, le module GSM inscrit des informations dans le composant d'identification non activé 190. La carte électronique peut éventuellement utiliser ces informations lors de la mise en service au sein du boîtier électronique. Il peut s'agir par exemple de paramètres de fonctionnement tels que l'adresse internet d'un serveur applicatif chargé de traiter les données envoyées par le boîtier électronique ou encore d'un mot de passe propre au boîtier et indépendant du code PIN du module GSM.

A la suite de l'étape 250, le deuxième test, un test de connectivité réseau GSM, débute. Ce test permet de vérifier que le composant d'identification non activé 190 est correctement connecté au module GSM 180 en vue d'établir une connexion avec un réseau GSM. Ainsi, dans une étape 260, le micro-contrôleur 170 active un compteur de temps dont la durée maximale est prédéterminée, telle que 30 secondes par exemple. Cette durée correspond à la durée de la procédure de test de la carte électronique 160. Simultanément, le micro-contrôleur 170 active le module GSM 180. Le micro-contrôleur envoie ensuite une requête (non représentée) au module GSM 180 afin que le module GSM 180 s'inscrive sur le réseau GSM accessible à cet instant donné, afin de signaler la présence du module GSM 180 sur ce réseau GSM. A cet effet, le module GSM 180 initie des émissions de signaux radio (non représenté) vers le réseau GSM accessible afin d'échanger des informations avec ce réseau GSM. Selon la norme ETSI TS 143.020, le réseau GSM cherche à identifier (non représenté) le composant d'identification non activé 190 afin d'établir quels types de communication sont accessibles au module GSM 180 utilisant le composant d'identification non activé 190. A cet effet, et suivant la norme ETSI TS 143.020, le réseau GSM envoie une première requête (non représenté) au module GSM 180 afin de demander le numéro TMSI éventuellement stocké dans le composant d'identification non activé 190. Dans la mesure où le composant d'identification non activé 190 n'a jamais été activé auparavant, aucun numéro TMSI n'est stocké sur le composant d'identification non activé 190. Le module GSM 180 informe (on représenté) alors le réseau GSM qu'aucun numéro TMSI n'est présent sur le composant d'identification non activé 190. Dans la mesure où le réseau GSM doit nécessairement identifier le composant d'identification non activé 190 pour établir une connexion avec le module GSM, le réseau GSM envoie alors une deuxième requête (non représenté) au module GSM 180 afin d'obtenir le numéro IMSI stocké sur le composant d'identification non activé 190. Le module GSM 180 extrait (non représenté) alors le numéro IMSI présent sur le composant d'identification non activé 190 et le transmet au réseau GSM.

Selon la norme ETSI TS 143.020, après la transmission du numéro IMSI, le réseau GSM transmet (non représenté) au module GSM 180 un numéro TMSI. Le module GSM 180 inscrit (non représenté) alors ce numéro TMSI au sein du composant d'identification non activé 190. Ainsi, lors de futurs échanges de communication entre le réseau GSM et le module GSM 180, ce numéro TMSI sera préférentiellement utilisé par rapport au numéro IMSI afin de garantir la confidentialité des échanges sur le réseau GSM. Selon la présente invention, dès que le module GSM 180 a effectué la transmission du numéro IMSI au réseau GSM, le module GSM 180 envoie un message indiquant la transmission du numéro IMSI au micro-contrôleur 170. Ainsi, lorsque le micro-contrôleur 170 reçoit ce message, le micro-contrôleur détermine dans une étape 280 que le module GSM 180 et le composant d'identification non activé 190 fonctionnement de manière correctement ensemble. La réception de ce message permet également au micro-contrôleur 170 de déterminer que ni le composant d'identification non activé 190 ni le module GSM ne sont défectueux. La procédure de test est donc terminée et le composant d'identification non activé 190 est considéré comme fonctionnel de même que le module GSM 180..

Dans la situation où le micro-contrôleur 170 ne reçoit aucun message en provenance du module GSM 180 et ce, pendant la durée de la procédure de test, le micro-contrôleur 170 détermine (non représenté) que le composant d'identification non activé 190 est défectueux. Ainsi, le composant d'identification non activé 190 nécessite alors une réparation ou une mise au rebut.

Dans la suite de la communication entre le module GSM 180 et le réseau GSM, après la transmission du numéro TMSI du réseau GSM au module GSM 180, les différents échanges de communication entre le réseau GSM et le module GSM 180 sont ignorés dans la mesure où la procédure de test est terminée.

De manière plus générale, le procédé de test d'une carte électronique comprenant un composant d'identification non activé 190 selon l'invention correspond à une des étapes nécessaires au sein d'un procédé global de fabrication et de distribution d'un boîtier électronique comprenant le composant d'identification non activé 190.

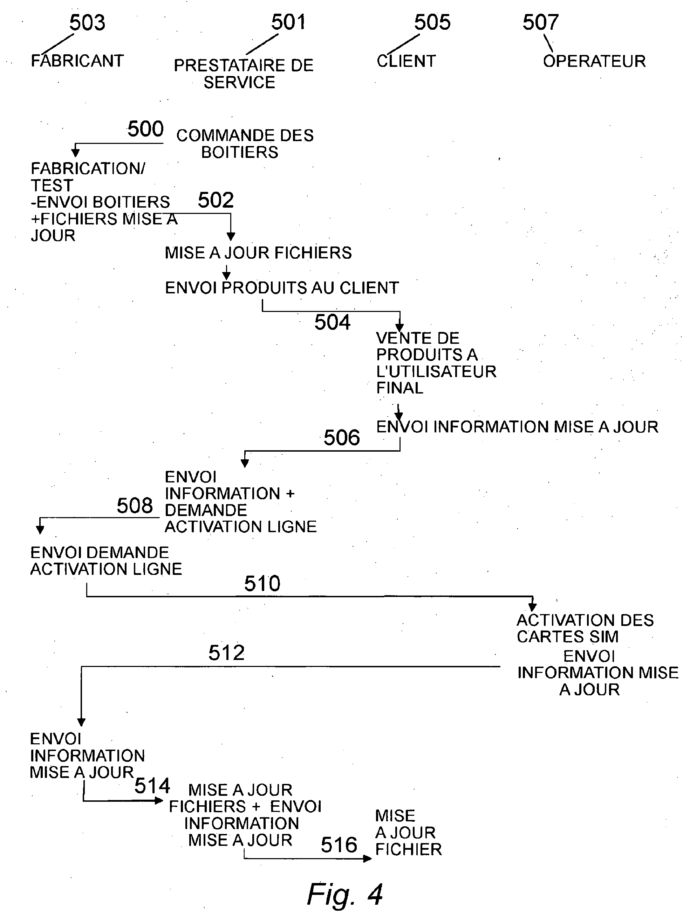

Différents acteurs interviennent dans le procédé global de fabrication et de distribution d'un boîtier électronique, comme montré sur la figure 4. Ainsi, un fabricant de cartes électroniques 400 est en relation commerciale avec un ou plusieurs prestataires de service 410 tel que des intégrateurs de service ou encore des fournisseurs de systèmes électroniques intégrés. Les prestataires de service 410 sont eux-mêmes en relation commerciale avec des clients 420. Enfin, les clients 420 sont en relation commerciale avec des utilisateurs finaux (non représentés). Le fabricant de cartes électroniques 400 fournit aux prestataires de service 410 une carte électronique selon la présente invention, qui comprend un composant d'identification non activé, par exemple une carte SIM non activée. Un opérateur de téléphonie mobile fournit la carte SIM non activée au fabricant de cartes électroniques 400. Chaque carte électronique est insérée au sein d'un boîtier électronique. Pour chaque boîtier électronique, le fabricant de cartes électroniques 400 génère un fichier électronique et une étiquette. Ainsi, le fichier électronique est sauvegardé dans la base de données 120 (montrée sur la figure 1) du fabricant de cartes électroniques 400 afin de répertorier les caractéristiques techniques de chaque boîtier électronique comprenant la carte électronique fabriquée et testée. L'étiquette reprend certaines informations du fichier électronique et est apposée sur la partie extérieure du boîtier électronique afin de permettre une identification visuelle de chaque boîtier électronique. De manière non exhaustive, pour un boîtier électronique déterminé, les fichiers électroniques comprennent des données telles que le numéro du boîtier électronique, la date d'expédition du boîtier électronique, le numéro d'IMEI du module GSM localisé sur la carte électronique, le numéro ICCID de la carte SIM non activée, le numéro de commande associé au boîtier électronique afin d'identifier le prestataire de service 410 à l'origine de la commande du boîtier électronique.

Le fabricant de cartes électroniques 400 peut échanger, avec le prestataire de service 410 et le client 420, des données électroniques concernant les caractéristiques des boîtiers électroniques fabriqués. L'échange de données comprend une émission de données électroniques et une réception de données électroniques. Chaque prestataire de service 410 et chaque client 420 possède un serveur (non illustré) qui comprend au moins une base de données et une plate-forme d'échange (non illustrées). Lors d'un échange de données électroniques, la plate-forme 130 du serveur 110 (selon la figure 1) du fabricant de cartes électroniques 400 envoie des informations de mise à jour à la plate-forme d'échange du serveur du prestataire de service afin de maintenir à jour la base de données du prestataire de service 410. Le serveur (non illustré) du prestataire de service 410 et le serveur (non illustré) du client 420 échangent des données électroniques de la même manière afin de maintenir à jour leurs bases de données respectives. Les différents serveurs des acteurs 400, 410 et 420 utilisent un protocole de télécommunication, tel que le SOAP lors de la transmission des informations de mise à jour des fichiers associés aux boîtiers électroniques.

Le procédé global de fabrication et de distribution du boîtier électronique se déroule selon les étapes suivantes, dans lesquelles les échanges de données électroniques utilisent le protocole précédemment évoqué.

En premier lieu, dans la situation présente, il est établi que le prestataire de service 410 propose de fournir un service particulier associé aux produits vendus par le client 420, tels que des véhicules. Ainsi, selon la situation, le prestataire de service peut être une compagnie d'assurances de véhicules et souhaite obtenir des informations liées aux habitudes de circulation d'un de leurs assurés. Ces informations concernent par exemple, le nombre de kilomètres parcouru par an, le nombre de déplacement par an, etc. Ainsi, en tenant compte de ces informations, la compagnie d'assurances peut adapter spécifiquement les contrats d'assurance des utilisateurs assurés. Par conséquent, la compagnie d'assurances peut réduire les frais d'assurance des assurés et fournir un service d'assurances amélioré.

Le procédé en tant que tel débute lorsqu'un utilisateur passe commande auprès du client afin d'acheter un produit du client tel qu'un véhicule. Le procédé peut également être réalisé lorsque plusieurs utilisateurs effectuent simultanément plusieurs commandes. Les étapes suivantes décrivent le procédé selon l'exemple d'un seul utilisateur. De plus, dans la présente situation, il est établi que chaque véhicule peut posséder un seul boîtier électronique associé à un prestataire de service.

Dans la situation où l'utilisateur commande un véhicule comprenant des services tels que le service proposé par le prestataire de service, alors le client transmet la commande au prestataire de service concerné en indiquant une date de livraison du produit, du client à l'utilisateur.

Dès lors, le procédé se poursuit comme indiqué sur la figure 5. Dans une étape 500, le prestataire de service 501 commande un nombre de boîtiers électroniques tels qu'indiqués auprès du fabricant de cartes électroniques 503. Ainsi, sur la base de cette commande, le fabricant de cartes électroniques 503 fabrique des cartes électroniques comportant des composants d'identification non activés tels que des cartes SIM non activées afin de produire le nombre prédéterminé de boîtiers électroniques. Le fabricant de cartes électroniques 503 procède également à un test fonctionnel sur chacune des cartes électroniques fabriquées. Ce test fonctionnel inclut le test du composant d'identification non activé190 et par conséquent du module GSM 180 correspondant selon la présente invention.

Dans une étape 502, le fabricant de cartes électroniques 503 envoie les boîtiers électroniques au prestataire de service 501 à l'origine de la commande. Simultanément, la plate-forme d'échange de données du serveur du fabricant de cartes électroniques 503 transmet à la plate-forme d'échange du serveur du prestataire de service 501 les fichiers électroniques associés aux caractéristiques techniques de chaque boîtier électronique commandé et reçu par le prestataire de service 501.

Dans une étape 504, le prestataire de service 501 envoie les boîtiers électroniques au client 505. Le client 505 intègre ces boîtiers électroniques au sein des véhicules destinés à des utilisateurs finaux (non représentés). Lors de la vente des véhicules, le client 505 transmet dans une étape 506, au prestataire de service 501 une demande d'activation de chaque composant d'identification non activé 190 associé à une carte électronique 160 au sein d'un boîtier électronique donné afin d'identifier le composant d'identification 190 au sein du réseau GSM de l'opérateur de téléphonie 507. Le prestataire de service 501 informe alors le fabricant de cartes électroniques 503 de la demande d'activation des composants d'identification non activés 190 en transmettant les caractéristiques techniques du boîtier électronique concerné pour chaque composant d'identification non activé 190 donné. Le fabricant de cartes électroniques 503 transmet ensuite à l'opérateur de téléphonie 507 la demande d'activation des composants d'identification non activés concernés. L'opérateur de téléphonie 507 effectue alors l'activation des composants d'identification non activés en attribuant à chacun des composants d'identification un numéro d'appel unique. Ce numéro d'appel unique permet d'authentifier c'est-à-dire d'identifier de manière non ambigüe les composants d'identification concernés sur le réseau GSM de l'opérateur de téléphonie 507. Ensuite, dans une étape 512, l'opérateur de téléphonie transmet au fabricant de cartes électroniques 503 les numéros d'appel associés aux composants d'identification activés. Dans une étape 514, le fabricant de cartes électroniques 503 transmet également les numéros d'appel des composants d'identification concernés au prestataire de service 501.

Ensuite, dans une étape 516, le prestataire de service 507 indique au client 505, par transmission de données électroniques, que les composants d'identification des utilisateurs finaux sont désormais activés. Ainsi, le client 505 peut effectuer la livraison du produit tel qu'un véhicule pour les utilisateurs finaux concernés.

Enfin, lors de la mise en service d'un véhicule concerné, le boîtier électronique communique avec un ou plusieurs modules électroniques du véhicule afin d'extraire certaines informations nécessaires au prestataire de service 501. De manière générale, ces informations sont programmées au préalable sur la carte électronique présente dans le boîtier électronique. Puis le boîtier électronique transmet, sans intervention de l'utilisateur final, les informations nécessaires au prestataire de service 501 en utilisant.le réseau GSM de l'opérateur de téléphonie 507.

Le procédé de test selon la présente invention permet donc de tester des composants d'identification non activés en association avec leurs modules GSM correspondants pour des cartes électroniques en évitant les frais d'activation auprès de l'opérateur de téléphonie.

Les modes de réalisation précédemment décrits sont indiqués à titre d'exemples uniquement.

## Revendications

1. Procédé de test pour une carte électronique (160) comprenant :
- un composant d'identification non activé (190) destiné à stocker des informations comprenant au moins un numéro définitif d'identification ;
- un module GSM (180) destiné à communiquer sur le réseau GSM associé au composant d'identification non activé (190) et à extraire des informations stockées au sein du composant d'identification non activé (190) ;
- un micro-contrôleur(170) destiné à communiquer avec le module GSM (180);
**caractérisé en ce que** le procédé de test comprend les étapes suivantes :
- émission par le réseau GSM d'une demande au module GSM (180) d'un éventuel numéro temporaire d'identification du composant d'identification non activé (190) ;
- recherche par le module GSM (180) de l'éventuel numéro temporaire d'identification au sein du composant d'identification non activé (190) ;
- détermination de l'absence d'éventuel numéro temporaire d'identification ;
- transmission par le module GSM (180) du numéro définitif d'identification du composant d'identification non activé (190) vers le réseau GSM ;
- transmission d'un message du module GSM (180) vers le micro-contrôleur (170) afin d'indiquer la transmission du numéro définitif d'identification du composant d'identification non activé (190) vers le réseau GSM ;
- détermination par le micro-contrôleur de la validité de l'état de fonctionnement du composant d'identification non activé (190) et de l'état de fonctionnement du module GSM (180).

2. Procédé de test selon la revendication 1, **caractérisé en ce que**, lorsque le réseau GSM est un réseau public, le procédé de test comprend l'activation d'un compteur de temps afin de détecter la réception du message transmis par le module GSM (180) vers le micro-contrôleur (170).

3. Procédé de test selon l'une des revendications précédentes, **caractérisé en ce que** le procédé de test comprend l'émission d'une demande par le réseau GSM du numéro définitif d'identification du composant d'identification non activé (190) au module GSM (180) en l'absence de l'éventuel numéro temporaire d'identification du composant d'identification non activé (190).

## Patentansprüche

1. Ein Testverfahren für eine elektronische Karte (160), umfassend:
- eine nicht aktivierte Identifikationskomponente (190), die zum Speichern von Informationen bestimmt ist, umfassend mindestens eine endgültige Identifikationsnummer;
- ein GSM-Modul (180), das zur Kommunikation über das GSM-Netz, das mit der nicht aktivierten Identifikationskomponente (190) assoziiert ist, und zum Abrufen der in der nicht aktivierten Identifikationskomponente (190) gespeicherten Informationen bestimmt ist;
- einen Mikrocontroller (170), der zur Kommunikation mit dem GSM-Modul (180) bestimmt ist;
**dadurch gekennzeichnet, dass** das Testverfahren die folgenden Schritte umfasst:
- Senden, durch das GSM-Netz, einer Anfrage an das GSM-Modul (180) für eine mögliche temporäre Identifikationsnummer der nicht aktivierten Identifikationskomponente (190);
- Abtasten, durch das GSM-Modul (180), nach der möglichen temporären Identifikationsnummer in der nicht aktivierten Identifikationskomponente (190);
- Bestimmen des Fehlens der möglichen temporären Identifikationsnummer;
- Übermitteln, durch das GSM-Modul (180), der endgültigen Identifikationsnummer der nicht aktivierten Identifikationskomponente (190) auf das GSM-Netz;
- Übermitteln einer Nachricht des GSM-Moduls (180) auf den Mikrocontroller (170), um die Übermittlung der endgültigen Identifikationsnummer der nicht aktivierten Identifikationskomponente (190) auf das GSM-Netz anzuzeigen;
- Bestimmen, durch den Mikrocontroller, der Gültigkeit des Betriebszustands der nicht aktivierten Identifikationskomponente (190) und des Betriebszustands des GSM-Moduls (180).

2. Testverfahren gemäß Anspruch 1, **dadurch gekennzeichnet, dass**, wenn das GSM-Netz ein öffentliches Netz ist, das Testverfahren das Aktivieren eines Zeitgebers zum Detektieren des Erhalts der durch das GSM-Modul (180) auf den Mikrocontroller (170) übermittelten Nachricht umfasst.

3. Testverfahren gemäß einem der vorhergehenden Ansprüche, **dadurch gekennzeichnet, dass** das Testverfahren das Senden, durch das GSM-Netz, einer Anfrage für die endgültige Identifikationsnummer der nicht aktivierten Identifikationskomponente (190) an das GSM-Modul (180) bei Fehlen der möglichen temporären Identifikationsnummer der nicht aktivierten Identifikationskomponente (190) umfasst.

## Claims

1. A test method for an electronic card (160) comprising:
- a non-activated identification component (190) for storing information comprising at least one definitive identification number;
- a GSM module (180) for communicating on the GSM network linked to the non-activated identification component (190) and for extracting information stored within the non-activated identification component (190);
- a microcontroller (170) for communicating with the GSM module (180);
**characterised in that** the test method comprises the following steps:
- the GSM network emits a request to the GSM module (180) for a possible temporary identification number of the non-activated identification component (190);
- the GSM module (180) searches for the possible temporary identification number within the non-activated identification component (190);
- determination of the absence of the possible temporary identification number;
- the GSM module (180) transmits the definitive identification number of the non-activated identification component (190) to the GSM network;
- a message is transmitted from the GSM module (180) to the microcontroller (170) in order to indicate the transmission of the definitive identification number of the non-activated identification component (190) to the GSM network;
- the microcontroller determines the validity of the operating state of the non-activated identification component (190) and of the operating state of the GSM module (180).

2. The test method according to claim 1, **characterised in that**, when the GSM network is a public network, the test method comprises activating a time counter in order to detect the reception of the message transmitted by the GSM module (180) to the microcontroller (170).

3. The test method according to any one of the preceding claims, **characterised in that** the test method comprises emitting a request by the GSM network for the definitive identification number of the non-activated component (190) to the GSM module (180) in the absence of the possible temporary identification number of the non-activated identification component (190).
